(19) Europäisches Patentamt
European Patent Office
Office européen des brevets

(11) Veröffentlichungsnummer: **0 144 896**
B1

(12) # EUROPÄISCHE PATENTSCHRIFT

(45) Veröffentlichungstag der Patentschrift: **16.03.88**

(51) Int. Cl.⁴: **C 09 B 19/02**, D 06 P 1/40

(21) Anmeldenummer: **84114315.9**

(22) Anmeldetag: **27.11.84**

(54) **Triphendioxazinfarbstoffe.**

(30) Priorität: **07.12.83 DE 3344254**

(43) Veröffentlichungstag der Anmeldung: **19.06.85 Patentblatt 85/25**

(45) Bekanntmachung des Hinweises auf die Patenterteilung: **16.03.88 Patentblatt 88/11**

(84) Benannte Vertragsstaaten: **CH DE FR GB LI**

(56) Entgegenhaltungen:
**DE-A-2 047 332**
**DE-A-2 503 611**
**FR-A-1 116 564**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl- Rumpff- Strasse 37, D-5090 Leverkusen 1 (DE)**
Erfinder: **Harms, Wolfgang, Dr., Walter- Flex- Str.21, 5090 Leverkusen 1 (DE)**

**EP 0 144 896 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Gegenstand der vorliegenden Erfindung sind Farbstoffe der Formel

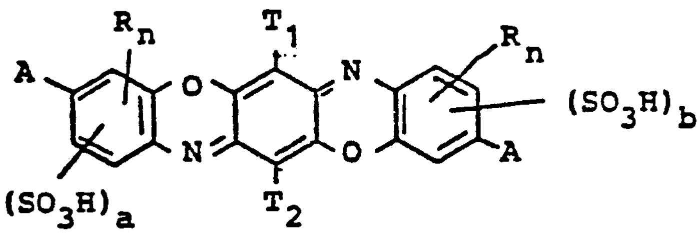

(1)

worin

A = 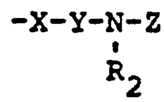

X = -O-, -S-, $-NR_1-$,
$R_1$ = H, $C_1$ -$C_4$ -Alkyl oder zusammen mit $R_2$ = Alkylen,
Y = aliphatischer oder araliphatischer Rest
$R_2$ = H, $C_1$ -$C_4$ -Alkyl, Aralkyl, Aryl,
Z = nicht faserreaktiver Rest der Formel $-SO_2B$ oder -CONHB worin
B = Alkyl, Cycloalkyl, Aralkyl, Aryl,
$T_1$,$T_2$ = H, Halogen, $C_1$-$C_4$-Alkyl, $C_1$-$C_4$-Alkoxy, Aryl,
R = Halogen, Carboxy, $C_1$-$C_4$-Alkyl, $C_1$-$C_4$-Alkoxy,
n = 0 oder 1
a,b = 0 oder 1, wobei a+b = 1 oder 2 und
wobei die Sulfogruppen jeweils in o-Stellung zu A stehen,
sowie deren Herstellung und Verwendung zum Färben von natürlichen oder synthetischen Fasermaterialien.

Bevorzugte Farbstoffe sind dabei solche mit $T_1$, $T_2$ = Cl, n = 0 und X = $NR_1$, insbesondere X = -NH.

Die Alkyl-, Aryl-, Alkoxy-, Aralkyl-, Phenyl- und Naphthylreste können gegebenenfalls in Farbstoffen übliche Substituenten aufweisen.

Geeignete Arylreste sind insbesondere gegebenenfalls substituierte Phenylreste oder Naphthylreste wobei als Substituenten insbesondere $C_1$-$C_4$-Alkyl, $C_1$-$C_4$-Alkoxy, Chlor, Brom, Nitro, Carbo-$C_1$-$C_4$-alkoxy, Carboxy und Sulfo in Frage kommen.

Geeignete Aralkylreste sind insbesondere Phenyl-$C_1$-$C_4$-alkyl die gegebenenfalls durch die obengenannten Substituenten substituiert sein können.

Geeignete aliphatische Reste sind beispielsweise geradkettige oder verzweigtes $C_2$-$C_6$-Alkylen, das beispielsweise durch Heteroatome wie N, O oder S oder Arylenreste oder CO-Gruppen unterbrochen oder durch Substituenten beispielsweise OH, Sulfo, Carboxy, gegebenenfalls substituiertes Phenyl oder $C_1$-$C_4$-Alkoxycarbonyl substituiert sein kann.

Geeignete araliphatische Reste sind beispielsweise Phenylalkylenreste, wobei die Phenylreste wie oben angegeben substituiert sein können und Alkylen bevorzugt für $C_1$-$C_4$-Alkylen steht.

Geeignete Alkylreste sind insbesondere $C_1$-$C_4$-Alkyl, das beispielsweise durch OH, Sulfo, $C_1$-$C_4$-Alkoxy substituiert sein kann.

Geeignete Reste Y sind beispielsweise: 1,2-Ethylen, 1,2- oder 1,3-Propylen, 2-Oxy-1,3-propylen, 1- und 2-Phenyl-1,3-propylen, 2-(4'-Sulfophenyl)-1,3-propylen, 1,4-, 2,3- und 2,4-Butylen, 2-Methyl-1,3-propylen, 2-Methyl-2,4-pentylen, 2,2-Dimethyl-1,3-propylen, 1-Phenylethylen, 1-Chlor-2,3-propylen, 1,6- und 2,5-Hexylen, 2,3-Diphenyl-1,4-butylen, 1-Methoxycarbonyl-1,5-pentylen, 1-Carboxy-1,5-pentylen, 2,7-Heptylen, 3-Methyl-1,6-hexylen, $-CH_2CH_2OCH_2CH_2-$, $-CH_2CH_2SCH_2CH_2-$,

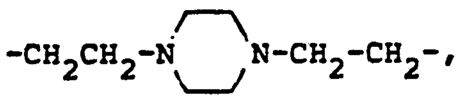, 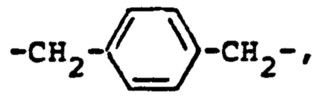,

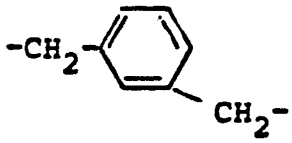, 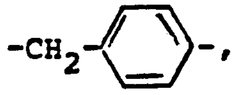,

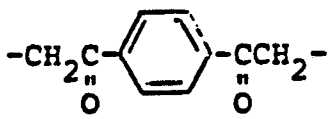 und 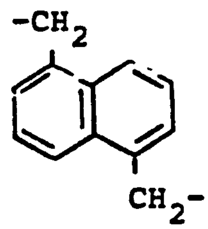

Y steht bevorzugt für einen geradkettigen oder verzweigten aliphatischen $C_2$-$C_6$-Rest, insbesondere für $-CH_2$-$CH_2$-, $-CH_2CH_2CH_2$-,

$-CH_2-CH_2-$, $-CH_2CH_2CH_2-$, 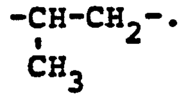.

Als Beispiel für Reste $R_2$ seien folgende aufgeführt: Wasserstoff, Methyl, Ethyl, Phenyl, 3- und 4-Sulfophenyl, Benzyl, Sulfomethyl, β-Hydroxyethyl, β-Methoxyethyl und β-Sulfatoethyl.

Geeignete Substituenten B sind insbesondere Phenyl- und Naphthyl die beispielsweise durch Methyl, Ethyl, Methoxy, Ethoxy, Chlor, Brom, Nitro, Ethoxycarbonyl, Carboxy, Methoxycarbonyl und Sulfo substituiert sein können, sowie $C_1$-$C_{10}$-Alkylreste die beispielsweise durch Methoxy, Chlor, Methoxycarbonyl und Carboxy substituiert sein können.

Geeignete Cycloalkylreste B sind beispielsweise Cyclohexylreste, die beispielsweise durch Methyl oder Ethyl substituiert sein können.

Geeignete Aralkylreste B sind insbesondere Benzylreste die wie für die Phenylreste B angegeben substituiert sein können.

Geeignete Reste Z sind beispielsweise $-SO_2CH_3$, $-SO_2C_2H_5$, $-SO_2CH_2Cl$, $-SO_2(CH_2)_4Cl$,

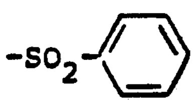, 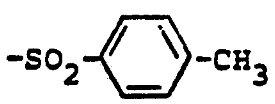, 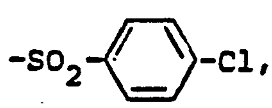, 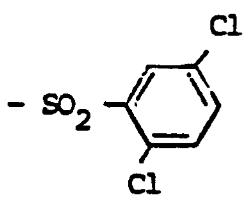

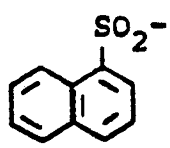 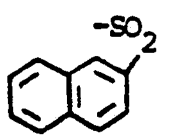 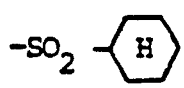

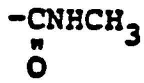, 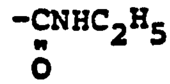, 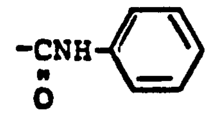, 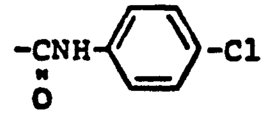,

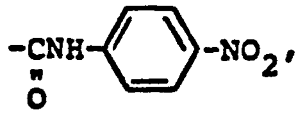, 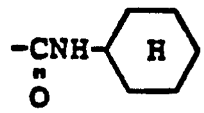, 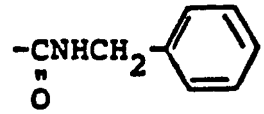

Gegenstand der Erfindung ist weiterhin ein Verfahren zur Herstellung der Farbstoffe der Formel (1), dadurch gekennzeichnet, daß man 1 Mol eines Farbstoffs der Formel

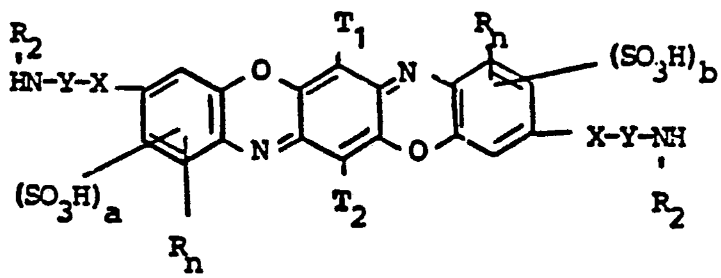 (2)

mit 2 Mol einer Acylkomponente der Formel

$ClSO_2B$ (3)

unter Abspaltung von 2 Mol HCl kondensiert oder mit 2 Mol eines Isocyanats der Formel

B - NCO (4)

kondensiert.

Die Kondensation der Farbbase (2) mit den Acylierungskomponenten (3) und (4) wird im allgemeinen in Wasser, bei Temperaturen zwischen 0 und 60°C und im pH-Bereich von 3 bis 12 angeführt. Zweckmäßig wird man während der Acylierungsreaktion mit (3) ein säurebindendes Mittel zusetzen um den pH im gewünschten Bereich zu halten.

Beispiele für Sulfonsäurechloride der Formel (3) sind: $CH_3SO_2Cl$, $C_2H_5SO_2Cl$, $Cl(CH_2)_4SO_2Cl$, $ClCH_2SO_2Cl$,

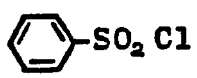, 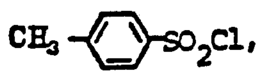, 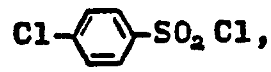,

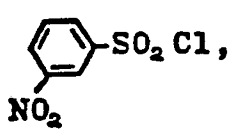, 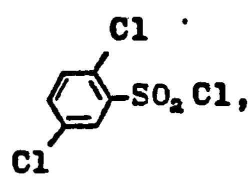, 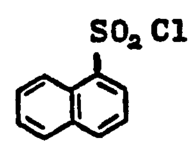, 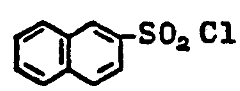

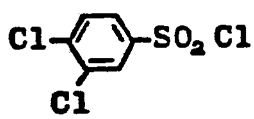 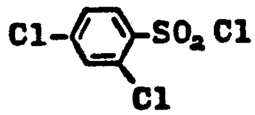 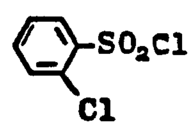

Beispiele für Isocyanate der Formel (4) sind: $CH_3NCO$, $C_2H_5NCO$,

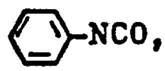, 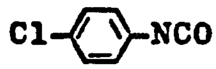 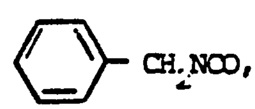,

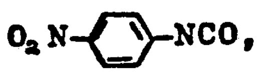, 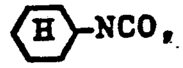, 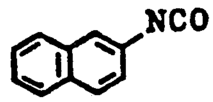, 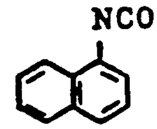

Die Farbbasen der Formel (2) sind bekannt. Sie können nach den Angaben der Britischen Patentschriften 1 559 752, 1 450 746 und 2 059 985 hergestellt werden.

Die erfindungsgemäßen Farbstoffe eignen sich zum Färben von Fasermaterialien, auf welche die Farbstoffe in Form einer wäßrigen Lösung durch Färbe-, Klotz- oder Druckverfahren aufgebracht werden können. Textilmaterialien, welche gefärbt werden können, sind z. B. Materialien, die natürliche Cellulosefasern, wie z. B. Papier, Baumwolle, regenerierte Cellulosefasern, wie z. B. Viskoserayon, natürliche Proteinfasern, wie z. B. Wolle und Seide, und synthetische Polyamidfasern, wie z. B. Nylon-66 (R) und Nylon-6 (R), enthalten. Die Farbstoffe eignen sich besonders zum Färben von synthetischen Polyamidtextilmaterialien, auf denen sie Färbungen mit einem überraschend hohen Grad von Echtheit gegenüber nassen Behandlungen ergeben. Die Polyamide können in jeder zweckmäßigen Form, wie z. B. in Form von Fäden, Stapelfasern, Textilstoffen oder Filmen, verwendet werden, und die Aufbringbedingungen können derart sein, wie es bereits für die Aufbringung von wasserlöslichen Farbstoffen auf synthetische Polyamide bekannt ist.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die angegebenen Formeln beziehen sich auf jeweils eines der bei der Umsetzung entstehenden isomeren Reaktionsprodukte.

Die Gewichtsangaben in den Beispielen beziehen sich auf die freie Säure. Die in den Beispielen angegebenen Farbkennzahlen beziehen sich auf Colour Index Hue Indication Chart (Indicator Numbers).

Die erfindungsgemäßen Farbstoffe mit acylierter Aminogruppe zeigen überraschend bessere färberische Eigenschaften (Aufbauvermögen auf Wolle und Polyamid) als die Farbstoffe des nächsten Standes der Technik (DE-A-2503611) mit nicht-acylierter Aminogruppe.

**Beispiel 1**

63,1 g der Farbstoffbase der Formel

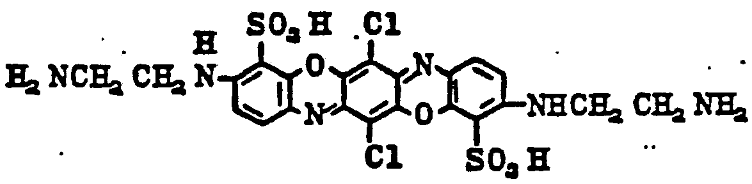

werden in 1 l Wasser angerührt. Bei 25° bis 35° C tropft man 35,3 g Benzolsulfochlorid ein und hält dabei durch gleichzeitige Zugabe von verdünnter Natronlauge den pH zwischen 8,5 und 9. Der Farbstoff geht während der Acylierung in Lösung. Nach beendeter Kondensation wird der Farbstoff ausgesalzen, getrocknet und gemahlen. Man erhält ein blaues Farbstoffpulver, das sich in Wasser mit klarer blauer Farbe löst. Der Farbstoff entspricht der Formel

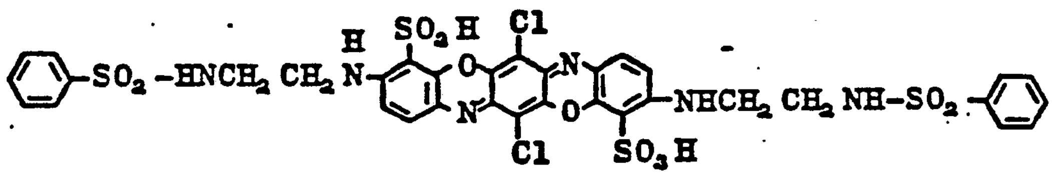

Nach einem der für Polyamide üblichen Färbeverfahren erhält man brillante blaue Färbungen (Farbkennzahl 13). Wenn man nach Angaben dieses Beispiels verfährt, jedoch unter Verwendung der Sulfochloride der folgenden Tabelle und der Farbbasen der nachfolgenden Formel so erhält man ebenfalls wertvolle blaue Farbstoffe.

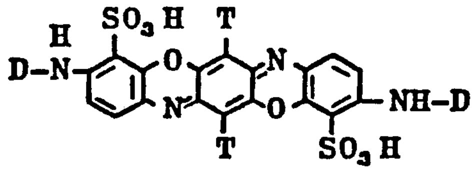

| Beispiel | D | T | Sulfochlorid | Farbton | Farbkennzahl |
|---|---|---|---|---|---|
| 2 | $CH_2CH_2NH_2$ | Cl | 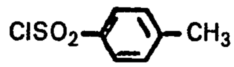 | Blau | 13 |
| 3 | $CH_2CH_2NH_2$ | Cl | 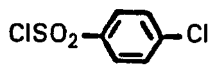 | " | " |
| 4 | $CH_2CH_2NH_2$ | Br | "2 | " | " |
| 5 | $CH_2CH_2NH_2$ | Cl | $ClSO_2CH_3$ | " | " |
| 6 | 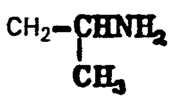 | Cl | 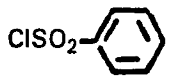 | " | " |
| 7 | 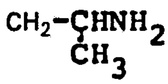 | Cl | 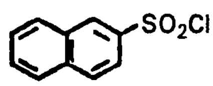 | " | " |
| 8 | $CH_2CH_2NH_2$ | Cl | 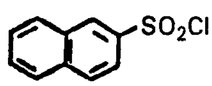 | " | " |
| 9 | $CH_2CH_2CH_2NH_2$ | Cl | 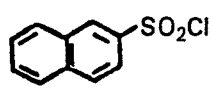 | " | " |
| 10 | $CH_2CH_2CH_2NH_2$ | Cl | 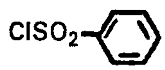 | " | " |
| 11 | $CH_2CH_2CH_2NH_2$ | | 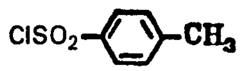 | " | " |
| 12 | $CH_2CH_2CH_2NH_2$ | | $ClSO_2CH_3$ | " | " |
| 13 | 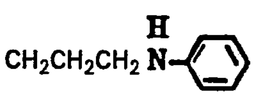 | | $Cl_2CH_3$ | " | " |
| 14 | 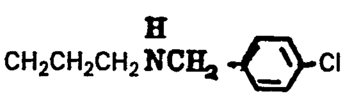 | | $ClSO_2CH_3$ | " | " |

**Beispiel 15**

63,1 g des Farbstoffs der Formel

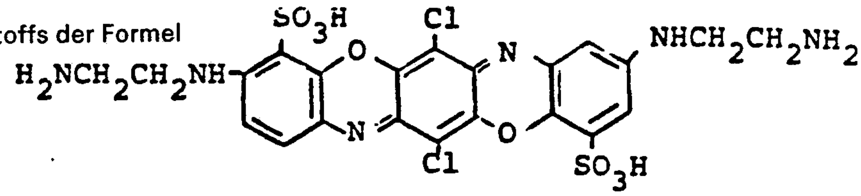

werden in 1,5 l Wasser angerührt und mit 13-14 ml konz. Natronlauge (d= 1,5) in Lösung gebracht. Man kühlt auf 5 bis 10°C ab und tropft in die alkalische Lösung 24 g Phenylisocyanat ein. Nach beendeter Kondensation wird der Farbstoff ausgesalzen, abgesaugt, getrocknet und gemahlen. Man erhält ein blaues Farbstoffpulver, das sich in Wasser mit klarer blauer Farbe löst. Der Farbstoff entspricht der Formel

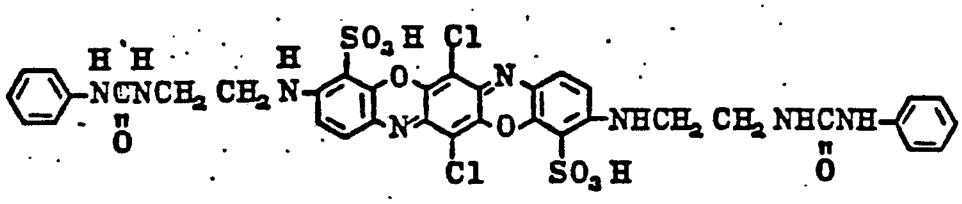

Nach einem der für Polyamidfarbstoffe üblichen Färbeverfahren erhält man klare blaue Färbungen (Farbkennzahl 13). Nach den Angaben dieses Beispiels erhält man weitere wertvolle Farbstoffe, wenn man die Isocyanate der folgenden Tabelle mit den entsprechenden Farbstoffbasen der Formel

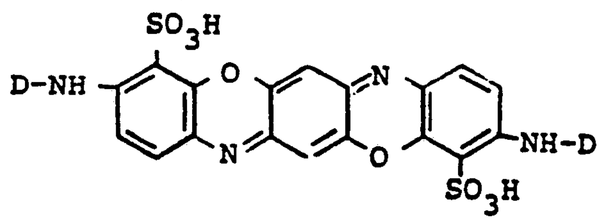

| Beispiel | D | T | Isocyanat | Farbton | Farbkennzahl |
|---|---|---|---|---|---|
| 16 | $CH_2CH_2NH_2$ | Cl | 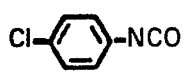 | Blau | 13 |
| 17 | $CH_2CH_2NH_2$ | " | 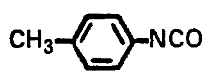 | " | " |
| 18 | $CH_2CH_2NH_2$ | " | 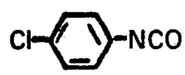 | " | " |
| 19 | $CH_2CH_2NH_2$ | " | 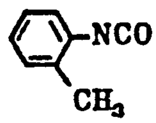 | " | " |
| 20 | $CH_2CH_2NH_2$ | " | 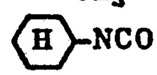 | " | " |
| 21 | $CH_2CH_2NH_2$ | " | $CH_2NCO$ | " | " |
| 22 | $CH_2CH_2NH_2$ | " | $C_2H_5NCO$ | " | " |
| 23 | $CH_2CH_2CH_2$ 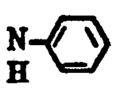 | " | $CH_3NCO$ | " | " |
| | | | $C_2H_5NCO$ | " | " |
| 24 | $CH_2CH_2CH_2$FIG6/9 | " | 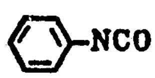 | " | " |

| | | | | | |
|---|---|---|---|---|---|
| 25 | $CH_2CH_2CH_2NH_2$ | $CH_3$ | 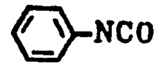 | " | " |
| 26 | $CH_2CH_2CH_2NH_2$ | $OCH_3$ | 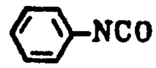 | " | " |

**Patentansprüche**

1. Farbstoffe der Formel

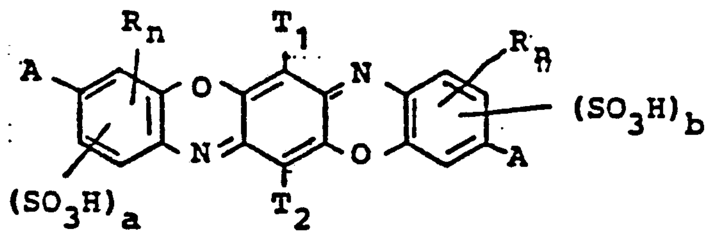

worin

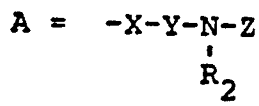

X = -O-, -S-, $-NR_1-$,
$R_1$ = H, $C_1$ -$C_4$ -Alkyl oder zusammen mit $R_2$ = Alkylen,
Y = aliphatischer oder araliphatischer Rest,
$R_2$ = H, $C_1$-$C_4$ -Alkyl, Aralkyl, Aryl,
Z = nicht faserreaktiver Rest der Formel $-SO_2B$
oder -CONHB worin
B = Alkyl, Cycloalkyl, Aralkyl, Aryl,
$T_1$,$T_2$H, Halogen, $C_1$-$C_4$-Alkyl, $C_1$-$C_4$-Alkoxy, Aryl,
R = Halogen, Carboxy, $C_1$-$C_4$-Alkyl, $C_1$-$C_4$-Alkoxy,
n = 0 oder 1,
a, b = 0 oder 1, wobei a + b = 1 oder 2 und
wobei die Sulfogruppen jeweils in o-Stellung zu A stehen.

2. Farbstoffe des Anspruchs 1 mit $T_1$, $T_2$ = Cl, n = 0 und X , -NH.

3. Verwendung der Farbstoffe der Ansprüche 1 und 2 zum Färben und Bedrucken von natürlichen und synthetischen Fasermaterialien.

4. Mit den Farbstoffen der Ansprüche 1 und 2 gefärbte und bedruckte natürliche und synthetische Fasermaterialien.

**Claims**

1. Dyestuffs of the formula

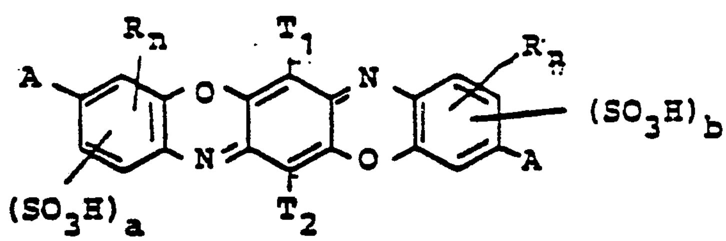

wherein

A = -X-Y-N(-$R_2$)-Z

X = -0-, -S- or $-NR_1-$,
$R_1$ = H, $C_l$-$C_4$-alkyl or, together with $R_2$, = alkylene,
Y = an aliphatic or araliphatic radical,
$R_2$ = H, $C_1$-$C_4$-alkyl, aralkyl or aryl,
Z = a non-fibre-reactive radical of the formula $-SO_2B$ or -CONHB wherein
B = alkyl, cycloalkyl, aralkyl or aryl,
$T_1$ and $T_2$ = H, halogen, $C_1$-$C_4$-alkyl, $C_1$-$C_4$-alkoxy or aryl,
R = halogen, carboxyl, $C_1$-$C_4$-alkyl or $C_1$-$C_4$-alkoxy,
n = 0 or 1,
a and b = 0 or 1 such that a+b = 1 or 2 and each of the sulpho groups is in the o-position relative to A.

2. Dyestuffs of Claim 1 where $T_1$ and $T_2$ = Cl, n = 0 and X = -NH.

3. Use of the dyestuffs of Claims 1 and 2 for dyeing and printing natural and synthetic fibre materials.

4. Natural and synthetic fibre materials dyed and printed with the dyestuffs of Claims 1 and 2.

## Revendications

1. Colorants de formule

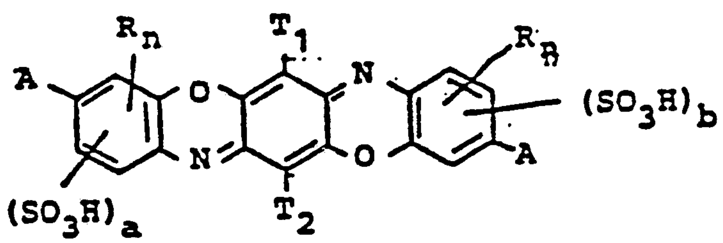

dans laquelle
A représente

-X-Y-N(-$R_2$)-Z

X représente -0-, -S-, $-NR_1-$,
$R_1$ représente H, un groupe alkyle en $C_1$ à $C_4$ ou forme un groupe alkylène conjointement avec $R_2$,
Y est un reste aliphatique ou araliphatique,
$R_2$ représente H, un groupe alkyle en $C_1$ à $C_4$, aralkyle, aryle,
Z est un reste non réactif envers la fibre, de formule $-SO_2B$ ou -CONHB dans laquelle
B est un groupe alkyle, cycloalkyle, aralkyle, aryle,
$T_1$, $T_2$ représentent l'hydrogène, un halogène, un groupe alkyle en $C_1$ à $C_4$, alkoxy en $C_1$ à $C_4$, aryle,
R est un halogène, un groupe carboxy, alkyle en $C_1$ à $C_4$, alkoxy en $C_1$ à $C_4$,
<u>n</u> a la valeur 0 ou 1
<u>a</u>, <u>b</u> représentent 0 ou 1, la somme a+b étant égale à 1 ou 2 et
les groupes sulfo étant tous deux en position ortho par rapport à A.

2. Colorants suivant la revendication 1, dans lesquels $T_1$, $T_2$ représentent Cl, <u>n</u> est égal à 0 et X représente -NH.

3. Utilisation des colorants suivant les revendications 1 et 2 pour la teinture et l'impression de matières fibreuses naturelles et synthétiques.

4. Matières fibreuses naturelles et synthétiques teintes et imprimées avec les colorants suivant les revendications 1 et 2.